(19) Europäisches Patentamt / European Patent Office / Office européen des brevets

(11) **EP 2 887 521 A1**

(12) **EUROPEAN PATENT APPLICATION**

(43) Date of publication:
24.06.2015 Bulletin 2015/26

(51) Int Cl.:
*H02M 3/335* (2006.01)    *H02M 1/08* (2006.01)

(21) Application number: **13199326.3**

(22) Date of filing: **23.12.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Kuebrich, Johann**<br>  **Redhill, Surrey RH1 1SH (GB)**<br>• **Halberstadt, Hans**<br>  **Redhill, Surrey RH1 1SH (GB)**<br>• **Pansier, Frans**<br>  **Redhill, Surrey RH1 1SH (GB)** |
| (71) Applicant: **NXP B.V.**<br>**5656 AG Eindhoven (NL)** | (74) Representative: **Hardingham, Christopher Mark**<br>**NXP Semiconductors**<br>**Intellectual Property and Licensing**<br>**Red Central**<br>**60 High Street**<br>**Redhill, Surrey RH1 1SH (GB)** |
| (72) Inventors:<br>• **Duerbaum, Thomas**<br>  **Redhill, Surrey RH1 1SH (GB)**<br>• **Schmid, Markus**<br>  **Redhill, Surrey RH1 1SH (GB)** | |

(54) **Switched mode power supplies and controllers, and a method of controlling a switched mode power supply**

(57)    A controller is disclosed for a synchronous rectification switch on a secondary side of a switched mode power supply, the switched mode power supply having a magnetic component having a winding, the controller comprising: an integrator configured to integrate, with respect to time, a voltage across the winding of the magnetic component; a comparator configured to compare the absolute value of the integrated voltage with a threshold value; and a driver configured to drive the control terminal of the synchronous rectification switch, wherein the driver is adapted to open the synchronous rectification switch in response to the absolute value of the integrated voltage falling below the threshold value. A switched mode power supply having such control is also disclosed, as is a method of operating a switched mode power supply using such a controller.

Figure 6

**Description**

Field

This disclosure relates to switched mode power supplies involving synchronous rectification and to controllers therefor, and to methods of controlling synchronous rectifiers for use in switched mode power supplies.

Background

Synchronous rectification is one way of improving efficiency of power converters in power electronics. It consists of connecting a transistor (typically a power MOSFET) and a diode (typically the body diode of the MOSFET) in parallel, to replace a diode used for rectification. When the diode would otherwise be forward-biased, the switching element is turned on, to reduce the voltage drop. When the diode would otherwise be reverse-biased, the transistor is turned off, so no current can flow through the parallel connection of switching element and diode. This way, a rectifying characteristic is obtained, without the forward voltage drop associated with diodes in the on-state.

The efficiency and effectiveness of synchronous rectification depends on the timing of the switching on and off of the transistor or switch. In particular, it is important that the switch is not turned off too late, lest current flows the wrong way past the rectifier. A current flowing in the wrong way is often not tolerable. However, it is also important that the switch is not turned off too early, since this would result in less than ideal rectification, with associated higher losses. In comparison, for proper functioning (though not necessarily for efficiency), the switch-on time instant is generally less critical, since detection of the correct switch-on instant is easier than detection of the correct timing of switch-off.

For low losses, the switching-off should be close to the zero crossing of the current through the rectifier. For the identification of the zero current state the small voltage drop across the channel of the switching element can be used, as it also can for the detection of the switch-on instant, although the voltage level is considerably lower for switch-off than the level for detection of the on-instant.

So, in order to ensure that unwanted reverse current does not flow through the rectifier, threshold voltages can be set to trigger switch-on (at 0.3V, say), and switch-off (typically at a much lower value, for instance at 10-40 mV).

However, the voltage signal seen by the comparator usually includes some parasitic oscillations caused by parasitic components. These include parasitic capacitances and inductances in the switch, the package and the layout. As a result, the signal usually has some superposed oscillations having a (almost) fixed frequency which is dependent on the components and the layout. These oscillations will also be referred to hereinafter as ringings. Since the circuit is normally intentionally made low-resistance in order to minimise ohmic-losses, the ringings are only lightly, or weakly, damped. The ringings may result in the switch-off threshold being prematurely crossed, resulting in the synchronous rectifier being prematurely switched off.

It is known to apply passive filtering in order to reduce the problem of early switch-off. In one such arrangement, leading edge blanking can be used to prevent a detection of the turn-off signal, until a minimum time period has elapsed. However, if the oscillation is still present and not sufficiently damped the switch will be switched off too early (or, for low power output, too late, due the blanking time).

Also known, for instance as published by Sync. Power Corp. in Application Note AN007 "SP6018 Simplifies Implementation of Synchronous Rectifier in Resonant Converters," 2009, is a predictive control method by using the timing information of the previous cycle to predict the correct timing of the present switching cycle.

Summary

According to a first aspect there is provided a controller, for a synchronous rectification switch on a secondary side of a switched mode power supply, the switched mode power supply having a magnetic component having a winding, the controller comprising: an integrator configured to integrate, with respect to time, a voltage representative of a voltage across the winding of the magnetic component; a comparator configured to compare the absolute value of the integrated voltage with a threshold value; and a driver configured to drive the control terminal of the synchronous rectification switch, wherein the driver is adapted to open the synchronous rectification switch in response to the absolute value of the integrated voltage not exceeding, or falling below, the threshold value.

Thus, according to this aspect, the controller integrates a voltage representative of a voltage across a winding of the transformer. The voltage representative of a voltage across a winding of the transformer may be the actual voltage across the winding, or may be, for example, a scaled version of that voltage, the scaling being provided for instance by a voltage divider. In dimensional terms, this integration provides a volt-second product. Analysis of this volt-second product may provide sufficient information to effectively control the timing of the synchronous rectification switch. It will be appreciated that use of the volt-second product on the secondary side may enable cycle-by-cycle control of the synchronous rectifier; this may be in contrast to conventional feedback or predictive methods. The comparator may compare momentary values of the integrated voltage directly, or the comparison may include local averaging, smoothing or other functionality as will be familiar to the skilled person, in order to, for instance, avoid false triggering due to transients or noise in the circuit and in particular superimposed on the integrated voltage signal; as used herein, the term "compare" shall be so understood. The threshold may be zero or non-zero. As used herein, the term "switched mode power converter" may be considered as synonymous with "switch (or switched) mode power supply".

In embodiments, the controller is configured for use with a switched mode power supply wherein the winding is on the secondary side of the supply. It will be appreciated that by using information available on the secondary side, a requirement for transferring information from the primary side across an isolation barrier may be avoided.

In embodiments the driver is adapted to open the synchronous rectification switch immediately the absolute value of the integrated voltage does not exceed the threshold value. In other embodiments the driver is adapted to open the synchronous rectification switch at the end of a predetermined delay after the absolute value of the integrated voltage does not exceed the threshold value. Since during the secondary stroke of the switched mode power supply, that is to say, when the synchronous rectification switch typically is closed, the absolute value of the integrated voltage is a falling value, the condition that the absolute value of the integrated voltage does not exceed the threshold value would typically be met as soon as the absolute value crosses the threshold value in a negative direction. The predetermined delay may increase with an increasing ratio between an input voltage of the switched mode power supply and an output voltage of the switched mode power supply.

In embodiments, the controller is further configured to close the synchronous rectification switch in response to an output voltage exceeding a predetermined reference level.

In embodiments, the driver is adapted to open the synchronous rectification switch when both the absolute value of the integrated voltage does not exceed the threshold value and a voltage across the rectifier switch has dropped to below a predetermined value. That is to say, in such embodiments the driver is adapted to open the switch only once both conditions are satisfied at the same time, and for the avoidance of doubt, in such embodiments the driver is not adapted to open the switch when just one of the two conditions is met.

In embodiments, the controller is configured for use in a switched mode power supply operating in boundary conduction mode and having a main switch, and the controller is further configured to close the main switch at the end of a delay determined by the ratio of an input voltage (Vin), being a voltage at the input of the switched mode power supply, and a reflected output voltage (N.Vout), being a voltage at an input side of the switched mode power supply corresponding to an output voltage of the switched mode power supply multiplied by a turns ratio of the magnetic component. The controller may be integral or distributed. For instance, the controller may comprise a primary-side controller and a secondary-side controller, and in particular, the primary-side controller may be configured to control the main switch and the secondary-side controller may be configured to control the synchronous rectification switch. The primary-side controller may be integral with the secondary-side controller, may be co-packaged with the secondary-side controller, or may be provided in a separate package from the secondary-side controller. In the latter case, the controller may be distributed across two packages.

In embodiments, the controller may further comprise a peak level detector configured to detect the peak level of the integrated voltage, and a power-related comparator configured to compare the peak level of the integrated voltage with a power-related threshold, the controller being configured to prevent the synchronous rectification switch from switching on in the event that the absolute value of the peak level of the integrated voltage does not exceed power-related threshold.

According to another aspect, there is provided a switched mode power supply comprising a controller described above. The switched mode power supply may be a flyback converter, operable in Boundary Conduction Mode, wherein the secondary side rectification switch is equipped with a controller as described above.

According to yet another aspect, there is provided a method of controlling a synchronous rectification switch on a secondary side of a switched mode power supply, the switched mode power supply having a magnetic component having a winding, the method comprising: integrating a voltage a voltage representative of a voltage across the winding of the magnetic component; comparing the absolute value of the integrated voltage with a threshold value; and switching off the synchronous rectification switch in response to the absolute value of the integrated voltage falling below, or not exceeding, the threshold value. The threshold value may be zero.

In embodiments, switching off the synchronous rectification switch in response to the absolute value of the integrated voltage not exceeding the threshold value comprises opening the synchronous rectification switch when both the absolute value of the integrated voltage does not exceed the threshold value and a voltage across the rectifier switch has dropped to below a predetermined value.

These and other aspects of the invention will be apparent from, and elucidated with reference to, the embodiments described hereinafter.

Brief description of Drawings

Embodiments of the invention will be described, by way of example only, with reference to the drawings, in which

figure 1 illustrates a conventional flyback switched mode power supply;
figure 2 illustrates a flyback converter similar to that shown in figure 1, but having a synchronous rectification switch on the output side;

figure 3 shows a typical current through a synchronous rectification switch during a secondary stroke of a switched mode power supply;

figure 4 shows voltages corresponding to the current shown in figure 3;

figure 5 shows the secondary side current of a typical switched mode power supply, including ringings;

figure 6 shows a block diagram of a switched mode power supply, including a controller according to embodiments;

figure 7 shows a circuit level implementation of embodiments shown in figure 6;

figure 8 shows a simulated voltage across a synchronous rectification switch according to embodiments; and

figure 9 shows a circuit level implementation of other embodiments.

It should be noted that the figures are diagrammatic and not drawn to scale. Relative dimensions and proportions of parts of these figures have been shown exaggerated or reduced in size, for the sake of clarity and convenience in the drawings. The same reference signs are generally used to refer to corresponding or similar feature in modified and different embodiments.

Detailed description of embodiments

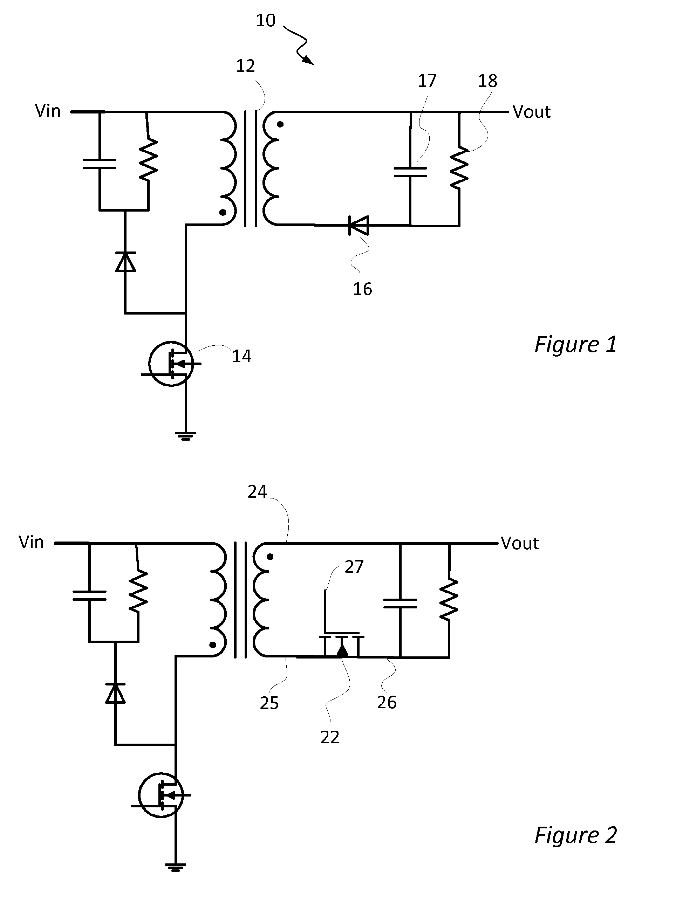

An example of a conventional flyback switched mode power supply 10 is shown in figure 1. The converter 10 includes a magnetic element, which in this case is a transformer 12. The primary side of the power converter is supplied by voltage Vin, and main switch 14 controls the current in the primary side coil of the transformer 12. The secondary side, or output, circuit comprises an output capacitor 17 in series with a diode 16 and across the secondary side coil of transformer 12. The output may supply a voltage Vout, and/or a load 18.

Figure 2 shows a similar flyback converter, but in this case the diode 16 is replaced with a synchronous rectification switch 22, having main terminals drain 25 and source 26, and a control terminal - typically a gate - 27. The drain terminal 25 is connected to one end of a secondary winding of the transformer 12; the opposite end of the winding is shown at 24. As discussed above, a synchronous rectification switch reduces secondary side losses associated with the diode: when the diode would have been blocking reverse currents, the switch is open; conversely when the diode would have been conducting, the switch is open. During the conduction periods, the loss associated with the forward voltage drop across the diode is replaced with the, typically much smaller, loss associated with the drain source on-resistance, Rdson, of the switch.

In conventional switched mode power supplies having synchronous rectification switches, the voltage across its main terminals 25 and 26, that is to say the sensed drain source voltage Vsd_sr, is compared with a threshold, and when the, normally forward, voltage falls below the threshold the switch is turned off; conversely when the forward voltage rises above the threshold, the switch is turned on. As noted above, due to different sensitivity to switch-off and switch-on times and currents, it may be convenient to use different threshold levels for switch on and switch off respectively. It will be appreciated, that, since the current is in a "reverse" direction, then the conventional terminology Vds for drain-source voltage has been replaced by the equivalent "reverse" terminology Vsd.

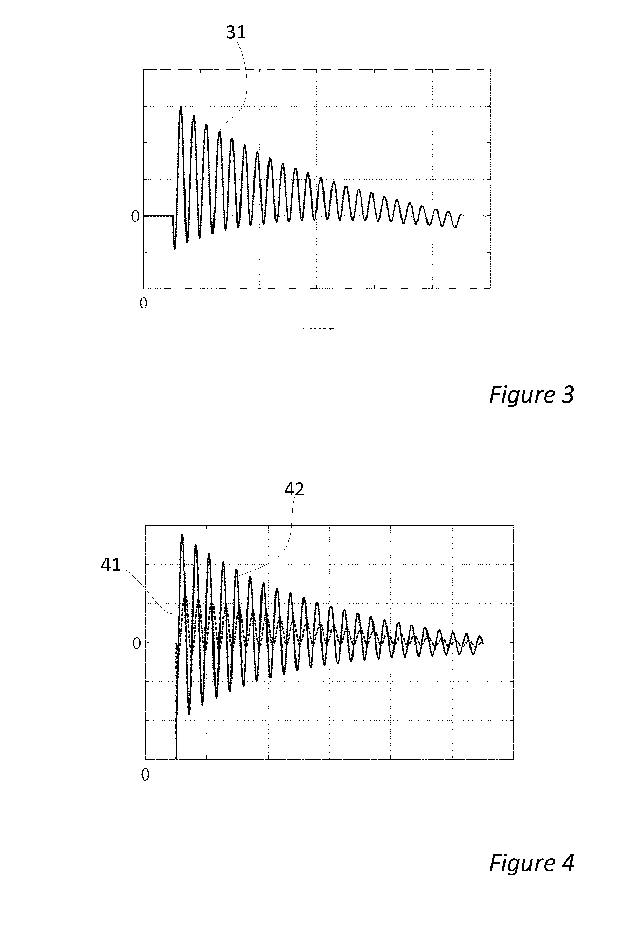

As already discussed in the introduction, parasitic oscillations or ringings in the output circuit may lead to premature switch off of the synchronous rectification switch. Figure 3 shows a typical current through a synchronous rectification switch during a secondary stroke of a switched mode power supply plotted on the y-axis or ordinate, plotted against time on the x-axis or abscissa. The figure shows at curve 31 the secondary side current occurring if parasitic components are taken into account. This is a triangular falling current with a superimposed weakly damped high frequency oscillation. The better, that is to say the more low-ohmic, the synchronous rectification switch is, the less damped the oscillation becomes. Thus in typical synchronous rectification circuits the oscillation remains as long as the synchronous rectification switch is closed (and in the case of a flyback this corresponds often nearly to the duration of the secondary stroke).

In figure 4, two typical voltage sense signals, which are related to the current shown in figure 3, are depicted plotted on the ordinate, again against time on the abscissa. Curve 41 (dashed line) demonstrates the sensed drain source voltage Vsd_sr in an idealized case in which no parasitic inductance due to the chip and the package is involved. This could be obtained by means of on-chip sensing (for example, using Kelvin contacts), and generally represents the best case which could be obtained. Even in this case the synchronous rectification detection circuit would switch off the synchronous rectifier much too early since the drain-source voltage crosses the zero level before the actual triangular current would reach zero (which is at the end of the shown current waveform). Curve 42 depicts the more realistic case that typically occurs if driver and synchronous rectification switch are implemented in two packages. In this case additional package inductances provide additional voltages due to high frequency oscillating currents.

In order to best realise the benefit of the synchronous rectification accurate detection of the turn-on and especially turn-off time instant is important.

According to embodiments, another detection circuit and method is disclosed. Embodiments utilise the fact that, in switched mode power supplies, the duration of demagnetising of the coil and thus the required duration of the conduction of the synchronous rectifier is dependent on the volt-second balance across the magnetic component. Thus, if the voltages across the magnetic components are known, the required conduction time of the rectifying element may be calculated. Therefore, it is possible to predict a minimum on-time of the rectifying element. In combination with the voltage detection circuit an accurate timing of the synchronous rectifier may be obtained. In the case of transformer based topologies with synchronous rectification on the secondary side the usage of the volt-second balance sensed at the secondary side is convenient, since it is then not necessary to provide any information about the timing of the magnetization and demagnetization via the galvanic isolation between the primary side and the secondary side.

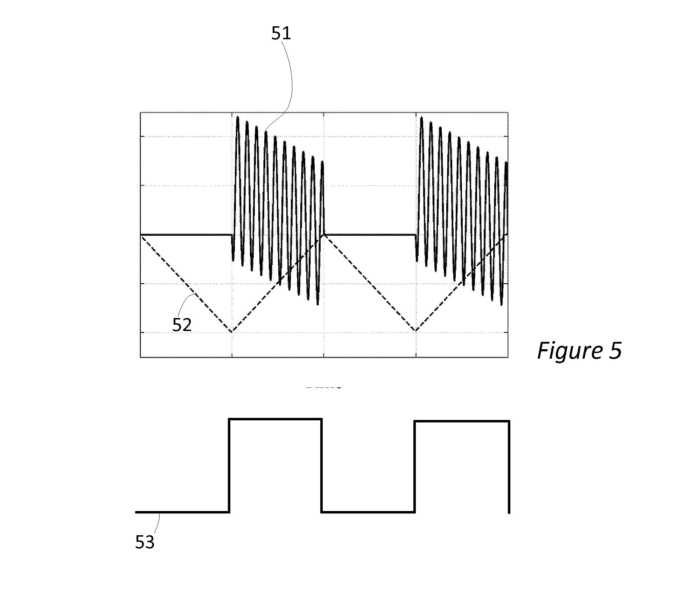

Figure 5 shows example waveforms of such an implementation: the figure shows at 51 the secondary side current, plotted on the ordinate, against time on the abscissa, over two cycles of a switched mode power supply. Superimposed on the same figure, at 52, is shown the value of a voltage integrator. As can be seen in the figure, during the primary stroke the integrated voltage becomes more negative at a constant rate, and during the secondary stroke the integrated voltage becomes less negative, once again at a constant rate. Once the integrator level reaches zero, the magnetic component is demagnetized and the synchronous rectifier may be switched off The figure also shows, at 53, the part of the cycle when the synchronous rectification switch should be conducting (that is to say, high).

Further, in embodiments, in combination with the voltage detection level, the concept can be easily used to implement an adaptable delay time by instead of integrating with the output voltage directly using either an additional small offset or using an output voltage multiplied by a value slightly higher than one (e.g. 1.05).

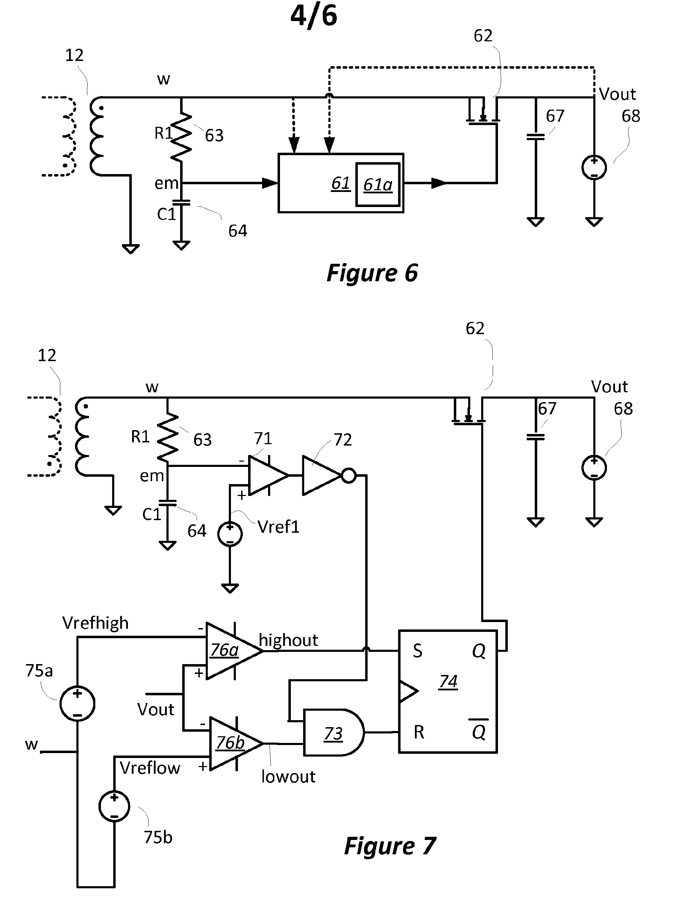

An example of a circuit which makes use of this volt-second balance is shown in block form in Figure 6. The figure shows the secondary side circuit of a power converter, which may be for instance a flyback converter. The figure shows a transformer 12, synchronous rectification switch 62 - which in this example is shown on the positive side of the output, rather than the negative side as in Figure 2, and output capacitor 67 connected to an output load 68. The synchronous rectification switch 62 connects the output capacitor and output load to the secondary winding of the transformer, and is opened to prevent unwanted reverse current flowing from the output capacitor, during the primary stroke (or any ringings after the end of the secondary stroke, for a converter working in discontinuous conduction mode). Timing of the synchronous rectification switch 62 is controlled by controller 61. A resistor 63 connects the secondary winding of the transformer, at a node "w", to a capacitor 64. The node between the resistor and capacitor is shown at "em". An output node is also shown at "Vout". The controller 61 has inputs from the nodes "em" and "Vout", and provides a control signal to the control terminal of the synchronous rectification switch 62, which may be implemented as a MOSFET. The controller may include a delay circuit 61 a, as will be considered in more detail below.

Figure 7 shows the secondary side circuit having a controller according to an embodiment, showing features of the controller in more detail. Node em is connected to one input of a comparator 71; the other input is a reference voltage Vref1. The output of the comparator 71 is inverted in an inverter 72, and provided as one input of a AND gate 73, the output from which is supplied as the reset input to a set-reset flip-flop 74.

Offsets to the voltage w are provided by voltage sources 75a and 75b to provide reference voltages Vrefhigh and Vreflow respectively. The reference values are provided as negative and positive input to respective comparators 76a and 76b; the positive and negative input to the respective comparators is provided from Vout. The output from the first comparator 76a, highout, is provided as the "set" input to set-reset flip-flop 74; the output from the second comparator 76b is provided as the second input to AND gate 73. The "Q" output from set-reset flip-flop 74 is connected to the gate of synchronous rectifier 62.

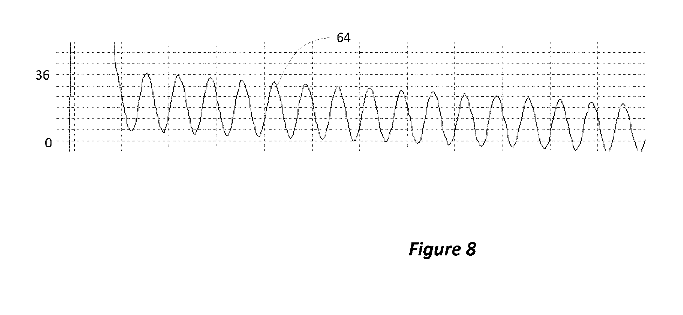

The function of comparators 76a, 76b and set-rest flip-flop 74 is known in the art: when the voltage difference between nodes w and Vout becomes more than a preset value Vrefhigh the MOSFET 62 that serves as synchronous rectifier is switched on: the set input of SR flipflop 74 is triggered on a positive going edge. Conversely, when the voltage across the conducting MOSFET 62 has dropped to below the voltage Vreflow, the flipflop is reset and the MOSFET 62 is switched off. Such an arrangement (that is to say, without the inclusion of the elements 63, 64, 71 and 73) would be effective for the idealised case of a neat triangle without superimposed ringing. However, due to the ringing the actual voltage difference across the MOSFET 62 is oscillating as well, as shown in Figure 8. Figure 8 shows a simulation of the voltage across synchronous rectification MOSFET 62 whilst it is on. In an example embodiment, the oscillations start between 6mV and 36 mV, and slowly drift lower, such that 3 μs later the oscillations are between approximately -6 mV and approximately 24 mV.

The oscillations across the synchronous rectifier do not provide any difficulty for the determination of the appropriate moment for switch-on: the forward voltage across the diode when it has to conduct the high initial forward current is high enough to reliably detect the proper timing of switch-on. However, once the MOSFET 62 is switched on, the voltage drops and the minimum voltage that appears across the switch may drop to only a few volts, or may even become negative. This could lead to an undesired premature switch-off. In general this effect would only occur close to the end of the conducting period, and so have only a small effect on the timing. However, switch-off could be triggered by a very low voltage across the synchronous rectification MOSFET 62 even at this very early stage of intended conduction. To avoid this, comparator 71 is used: at the start of the conduction time of the primary switch (typically at the start of a primary stroke), the voltage across C1 is 0, or is near to 0. At this time the voltage at node w is negative, and so C1 starts to charge in a negative direction. Provided the resistance of R1 is sufficiently high, the charging current of C1 may be considered as effectively constant, and as a result the voltage across C1 is proportional to the integration of the voltage at node w. However, the skilled person would appreciate that the transformer current is also proportional to that, and so implicitly the voltage across C1 is a measure of the actual current in the transformer. After the primary switch is switched off, typically at the start of the secondary stroke, the voltage across the winding becomes positive. Now the rate of increase of the voltage across C1 is a measure of the decay of the current in the transformer. When the voltage across C1 has returned to zero, this indicates that also the current in the transformer has just dropped to zero. In summary this voltage is a good emulation of the current in the transformer. In an idealised case, the voltage em, when returned to zero, indicates the exact instant that the current has dropped to zero. It will be appreciated, however, that in practice there are always tolerances of various sort, leading to either the switch-off moment being either slightly premature or slightly too late. Whereas the former will only lead to some additional losses, but the latter could lead to serious performance degradation, and in the worst case might even cause instabilities.

Comparing the voltage across C1 with a reference voltage Vref1 provides an indication of whether or not there is still a considerable amount of current flowing. As long as the current is still flowing inverted output of the comparator inhibits the flip-flop from being reset, since the signal lowout on the output to a comparator 76b can only reach the reset input to the flip-flop 74 when that inverted output is also high. In a typical embodiment, having oscillations as shown in figure 8, the reference voltage Vref1 may be as small as -0.02V.

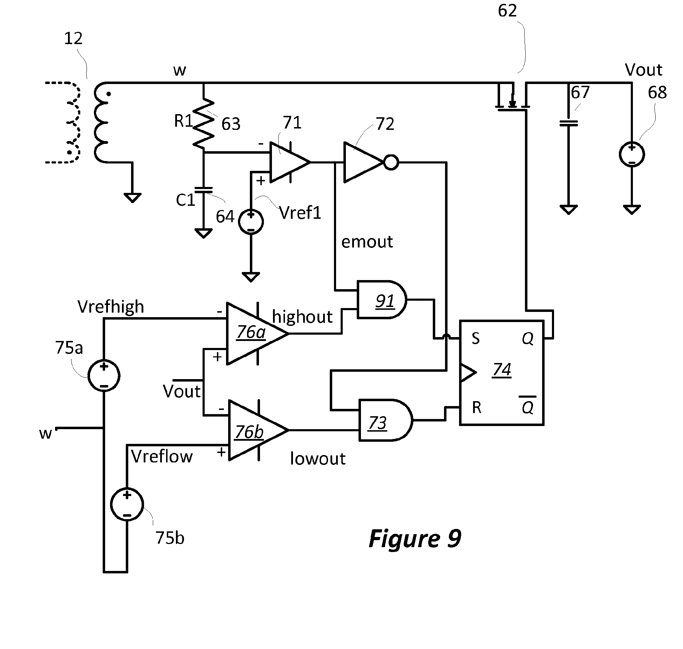

Figure 9 shows a secondary side circuit having a controller according to another embodiment. The circuit is generally similar to that shown in figure 7. However, in this embodiment, a further signal is included: the output from comparator 71 which may also be called an emulating comparator, emout, is provided as a first input to a further AND gate 91. The output highout from comparator 76a is not provided directly as the "set" input to flip-flop 74, but is provided as the second input to AND gate 91, the output from which provides the input to flip-flop 74. In operation, in case the voltage at the capacitor C1, that is to say at node em, has not dropped low enough, the signal highout is inhibited from setting the flip-flop. This occurs at very low currents. As a result, only the body diode of the synchronous rectification transistor 62 will conduct in the case of low current levels. By using two different levels of Vref, enhanced flexibility may be obtainable.

Arranging that only the body diode of the synchronous rectification transistor 62 conducts in the case of low current levels may result in two benefits. Firstly for low current levels, the contribution of the driver losses is non-negligible: these losses are avoided by preventing switching on the synchronous rectification transistor. Secondly, this embodiment prevents the situation from occurring in which the actual time during which output current flows is less than the minimum achievable on-time of the synchronous rectification transistor. Were this situation to occur, it would cause reverse currents, which, although not necessarily dangerous for normal operation may considerably reduce efficiency at low load. This would be the result of the higher RMS currents, which would result from the higher peak currents on both primary and secondary side, which would be needed to compensate for the charge transferred back during the reverse current period.

According to other embodiments, the controller may be provided with a delay circuit 61 a, whereby the synchronous rectification switch is switched off at the end of a predetermined delay following the end of the volt-second integration period. It may be convenient to introduce such a delay in order to enhance soft switching of the primary side switch, as follows: whenever the primary switch is switched-on, there are switch-on losses (calculated as $E=\frac{1}{2}CV^2$). Allowing the synchronous rectification switch to conduct for a short time after the current has dropped to zero, allows a small negative current to start to flow. After switching off the synchronous rectification switch, the energy stored in this way in the transformer discharges the capacitances across the switch to a voltage lower than original, thereby reducing V at switch-on, and thus reducing switching losses. It may be advantageous to the operating efficiency of the switched mode power supply for this delay to be dependent on the power level of the switched mode power supply. In particular, for supplies operating at a relatively low output voltage, it may be desirable to increase the delay. Thus in embodiments it may be provided that the delay may be made dependent on the ratio of the above input voltage and the output voltage such that for relatively low output voltage is, the delay is relatively long. To more fully understand this, consider the following: in the case that Vin equals NVout, no reverse current is needed at all, because the primary voltage will ring to zero Volt anyhow. The higher the input voltage with respect to NVout, the more negative current is needed to reach soft switching at the primary side.

According to another embodiment, the accurate detection of appropriate moment to end the on-time of the synchronous rectification switch may be used to enable Zero-Voltage-Switching (ZVS), also referred to as soft switching, of the main switch of the switch-mode power supply in case of boundary conduction mode (BCM): as already discussed, it is preferred to ensure that turn-off moment of the synchronous rectification switch is not too late, since otherwise a current would flow in the wrong way. Such a current flowing in the wrong way - that is to say, a negative current - is often not tolerable. However, since the detection scheme according to embodiments allows accurate timing of the synchronous rectification it may be possible to allow a small negative current for short, pre-defined time:

In BCM, the main switch is turned on as soon as the magnetic component is demagnetized, that is to say after the zero crossing of the current flowing via the synchronous rectification. Due to the blocking voltage applied on the main switch, turn-on losses occur.

As soon as a negative current starts to flow, via the synchronous rectifier, the converter is driven in bidirectional mode. This negative current in the synchronous rectification switch results in a negative current in the primary winding of the transformer, and this negative current will discharge any capacitance, parasitic or otherwise, at the node connecting the transformer with the primary switch. Since the main switch is not actively switched on during this time, the voltage at that node will decrease to zero, or close to zero - depending on the duration of the additional on-time of the secondary side synchronous rectification switch. In case that the secondary side on-time is somewhat longer than needed to produce, in the primary winding of the transformer, sufficient negative current to discharge that capacitance, the excess negative current will flow through the internal body-diode (or any external anti-parallel diode, should that be included in the circuit) of the main switch. Thus, the voltage across the main switch is clamped to this small diode's forward voltage drop before the switch is turned on actively, so that the main switch can be switched on under ZVS conditions.

Hence, the accurate timing of the synchronous rectification may also enable a pre-defined negative current in the main-switch leading to ZVS to improve the efficiency of the converter. Furthermore, the available information gained from the volt-second balance may be used also to decide whether such a bidirectional mode for ZVS is helpful, especially with respect to the operating conditions such as input voltage level or power level. The skilled person will appreciate that at low input voltage the additional negative current will generally not be necessary, and in situations in which the additional negative current is helpful, the optimal value of the negative current increases with increasing input voltage. It may be shown that the optimal value of the negative current, that is to say, the value required to just reach ZVS without any excess current, assuming that the capacitance is not dependent on the voltage):

$$I_{neg} = \sqrt{\left(\frac{C}{L}\right)}\sqrt{\left(V_i^2 - (NV_{out})^2\right)}.$$

Further, although for non-linear capacitance the formula is more complex, the operation principle remains the same.

The skilled person will appreciate that, for switched mode power supplies having a primary switch on the primary side of the transformer, it may be necessary to transfer the information regarding the volts-second balance from the secondary side of the transformer to the primary side, in order to properly control the primary switch. This may be done by known means, such as Opto-isolators.

From reading the present disclosure, other variations and modifications will be apparent to the skilled person. Such variations and modifications may involve equivalent and other features which are already known in the art of synchronous rectifiers in switched mode power supplies, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A controller, for a synchronous rectification switch on a secondary side of a switched mode power supply, the switched mode power supply comprising a magnetic component having a winding, the controller comprising:

   an integrator configured to integrate, with respect to time, a voltage representative of a voltage across the winding of the magnetic component;
   a comparator configured to compare the absolute value of the integrated voltage with a threshold value; and
   a driver configured to drive a control terminal of the synchronous rectification switch,

wherein the driver is adapted to open the synchronous rectification switch in response to the absolute value of the integrated voltage not exceeding the threshold value.

2. A controller as claimed in claim 1, wherein the threshold value is zero.

3. A controller as claimed in claim 1 or 2, configured for use with a switched mode power supply wherein the winding is on the secondary side of the supply.

4. A controller as claimed in any preceding claim, wherein the driver is adapted to open the synchronous rectification switch immediately the absolute value of the integrated voltage does not exceed the threshold value.

5. A controller as claimed in any of claims 1 to 3, wherein the driver is adapted to open the synchronous rectification switch at the end of a predetermined delay after the absolute value of the integrated voltage does not exceed the threshold value.

6. A controller as claimed in claim 5, wherein the predetermined delay increases with an increasing ratio between an input voltage of the switched mode power supply and an output voltage of the switched mode power supply.

7. A controller as claimed in any of claims 1 to 3, wherein the controller is further configured to close the synchronous rectification switch in response to an output voltage exceeding a predetermined reference level.

8. A controller as claimed in any of claims 1 to 3, wherein the driver is adapted to open the synchronous rectification switch when both the absolute value of the integrated voltage does not exceed the threshold value and a voltage across the synchronous rectification switch has dropped to below a predetermined value.

9. A controller as claimed in any preceding claim, configured for use in a switched mode power supply operating in boundary conduction mode and having a main switch, wherein the controller is further configured to close the main switch at the end of a delay determined by the ratio of an input voltage (Vin), being a voltage at the input of the switched mode power supply, and a reflected output voltage (N.Vout), being a voltage at the input side of the switched mode power supply corresponding to an output voltage of the switched mode power supply multiplied by a turns ratio of the magnetic component.

10. A controller as claimed in any preceding claim, further comprising a peak level detector configured to detect the peak level of the integrated voltage, and a power-related comparator configured to compare the peak level of the integrated voltage with a power-related threshold, the controller being configured to prevent the synchronous rectification switch from switching on in the event that the absolute value of the peak level of the integrated voltage does not exceed the power-related threshold.

11. A switched mode power supply comprising a controller as claimed in any preceding claim.

12. An electronic appliance operable with a range of power level and comprising a switched mode power supply as claimed in claim 11.

13. A method of controlling a synchronous rectification switch on a secondary side of a switched mode power supply, the switched mode power supply having a magnetic component having a winding, the method comprising:

integrating a voltage representative of a voltage across the winding of the magnetic component; comparing the absolute value of the integrated voltage with a threshold value; and switching off the synchronous rectification switch in response to the absolute value of the integrated voltage not exceeding the threshold value.

14. The method of claim 13, wherein the threshold value is zero.

15. The method of claim 13 or 14, wherein switching off the synchronous rectification switch in response to the absolute value of the integrated voltage not exceeding the threshold value comprises opening the synchronous rectification switch when both the absolute value of the integrated voltage does not exceed the threshold value and a voltage across the rectifier switch has dropped to below a predetermined value.

Figure 1

Figure 2

*Figure 3*

*Figure 4*

51

52

Figure 5

53

# 4/6

**Figure 6**

**Figure 7**

*Figure 8*

**Figure 9**

**EP 2 887 521 A1**

| | Europäisches Patentamt / European Patent Office / Office européen des brevets | **EUROPEAN SEARCH REPORT** | Application Number EP 13 19 9326 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/300520 A1 (REN YUANCHENG [CN] ET AL) 29 November 2012 (2012-11-29) * paragraphs [0036] - [0049], [0053] - [0058]; figures 2,3,12 * | 1-15 | INV. H02M3/335 H02M1/08 |
| X | US 2010/027298 A1 (COHEN ISAAC [US]) 4 February 2010 (2010-02-04) * paragraphs [0016], [0017], [0036] - [0041]; figure 3 * | 1-9, 11-15 | |
| A | ACKER B ET AL: "Synchronous rectification with adaptive timing control", POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, vol. 1, 18 June 1995 (1995-06-18), pages 88-95, XP010150543, DOI: 10.1109/PESC.1995.474797 ISBN: 978-0-7803-2730-6 | 1-15 | |

| TECHNICAL FIELDS SEARCHED (IPC) |
|---|
| H02M |

The present search report has been drawn up for all claims

| Place of search | Date of completion of the search | Examiner |
|---|---|---|
| Munich | 5 June 2014 | Grosse, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**

EP 13 19 9326

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2014

| Patent document cited in search report | | Publication date | Patent family member(s) | | Publication date |
|---|---|---|---|---|---|
| US 2012300520 | A1 | 29-11-2012 | CN<br>TW<br>US | 102195492 A<br>201301729 A<br>2012300520 A1 | 21-09-2011<br>01-01-2013<br>29-11-2012 |
| US 2010027298 | A1 | 04-02-2010 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• SP6018 Simplifies Implementation of Synchronous Rectifier in Resonant Converters. Application Note AN007. Sync. Power Corp, 2009